# EUROPÄISCHE PATENTSCHRIFT

(11) **EP 1 501 321 B1**
(45) Veröffentlichungstag und Bekanntmachung des Hinweises auf die Patenterteilung: **30.05.2012**
(21) Anmeldenummer: 04014940.3
(22) Anmeldetag: 25.06.2004
(51) Int. Cl.: G08G 1/01, H04W 64/00, H04W 24/00

(54) **Verfahren und System zum Erzeugen von Informationsdaten**
Method and system for obtaining information data.
Procédé et système pour obtenir des données d'informations

(30) Priorität: 24.07.2003 DE 10333793
(43) Veröffentlichungstag der Anmeldung: 26.01.2005
(73) Patentinhaber: Vodafone Holding GmbH, 40213 Düsseldorf (DE)
(72) Erfinder: Gerasimon, Nicolas, 31542 Bad Nenndorf (DE); Alger, Michael, Dr., 85540 Haar (DE); Quartier, Frank, Dr., 47533 Kleve (DE)
(74) Vertreter: Müller, Thomas

(56) Entgegenhaltungen:
- WO-A-02/03350
- WO-A-02/45046
- DE-A1- 10 149 943
- GB-A- 2 369 709
- US-A- 5 465 289
- US-A1- 2002 107 634

## Beschreibung

Die vorliegende Erfindung betrifft zunächst ein Verfahren zum Erzeugen von Informationsdaten gemäß dem Oberbegriff von Patentanspruch 1. Weiterhin betrifft die Erfindung ein System zum Erzeugen von Informationsdaten gemäß dem Oberbegriff von Patentanspruch 19.

Derartige Verfahren beziehungsweise Systeme sind beispielsweise im Zusammenhang mit der Erzeugung von Verkehrsinformationsdaten bekannt. In diesem Zusammenhang werden sie beispielsweise eingesetzt, um die Reisezeit eines Fahrzeugs zwischen einem gewählten Ausgangspunkt und einem räumlich davon getrennten Endpunkt zu bestimmen. Sie werden jedoch auch eingesetzt, um das Verkehrsaufkommen auf Straßen zu bestimmen und daraus Vorhersagen über die Verkehrsbedingungen auf Straßen bis hin zu existierenden Staus machen zu können. Hierzu sind bereits unterschiedliche Lösungen bekannt geworden.

So ist es beispielsweise bekannt, die Fortbewegungszeit eines Fahrzeugs mittels stationären Radarsensoren, in der Straße eingelassenen Induktionsschleifen oder dergleichen zu erfassen. Dabei passieren die Fahrzeuge die Sensoren beziehungsweise Induktionsschleifen, die dann beispielsweise die Geschwindigkeit, die Verkehrsdichte und ähnliche Daten messen/erzeugen und die bei Anomalien eine Meldung an eine Zentraleinheit absetzen. Dort werden die Daten gesammelt und zu einem entsprechenden Verkehrslagebild verarbeitet. Diese bekannte Lösung hat jedoch den Nachteil, dass Sie zum einen sehr aufwendig und zum anderen sehr kostenintensiv ist. So ist es beispielsweise erforderlich, eine spezielle Infrastruktur zu schaffen.

Es besteht daher das Bedürfnis, Lösungen bereitzustellen, die auf derartige zusätzliche Infrastrukturen verzichten können.

In diesem Zusammenhang ist es bereits bekannt geworden, Informationsdaten auf der Basis von in einem zellularen Kommunikationsnetz erzeugten spezifischen Daten mobiler Endeinrichtungen zu erzeugen. Bei einem solchen zellularen Kommunikationsnetz kann es sich beispielsweise um ein zellulares Telefonnetz handeln, wobei die mobilen Endeinrichtungen in einem solchen Fall vorzugsweise als Mobiltelefone ausgebildet sind. Bei den spezifischen Daten der mobilen Endeinrichtungen, die zur Erzeugung der Informationsdaten herangezogen werden, kann es sich vorteilhaft um Informationsdaten handeln, die während des Betriebs der mobilen Endeinrichtungen ohnehin anfallen.

Eine diesbezüglich bekannte Lösung zur Erzeugung von Informationsdaten auf der Basis von in einem zellulare Kommunikationsnetz erzeugten spezifischen Daten mobiler Endeinrichtungen ist in der DE 101 49 943 A1 beschrieben. Dabei werden spezifische Daten wenigstens einer mobilen Endeinrichtung erfasst und in einer zentralen Rechnereinheit elektronisch bearbeitet. Auf diese Weise können Informationsdaten bezüglich wenigstens einer Zelle des Kommunikationsnetzes erzeugt werden. Bei diesem bekannten Verfahren wird die Fortbewegungszeit wenigstens einer mobilen Endeinrichtung zwischen einem Ausgangspunkt und einem räumlich davon getrennten Endpunkt ermittelt. Dazu werden die spezifischen Daten wenigstens einer am Ausgangspunkt und am Endpunkt befindlichen mobilen Endeinrichtung ermittelt und jeweils mit einer Zeitmarke verknüpft. Die spezifischen Informationen der mobilen Endeinrichtungen werden in wenigstens einer zentralen Rechnereinheit elektronisch miteinander verglichen. Bei Übereinstimmung der spezifischen Daten einer mobilen Endeinrichtung am Ausgangspunkt sowie am Endpunkt wird in der zentralen Rechnereinheit elektronisch die Zeitdifferenz zwischen den Zeitmarken gebildet und daraus die Fortbewegungszeit ermittelt. Auf diese Weise kann die Fortbewegungszeit der mobilen Endeinrichtung auf einfache und kostengünstige Weise ermittelt werden, ohne dass dafür eine spezielle Infrastruktur erforderlich wäre.

Die vorstehend beschriebenen, aus dem Stand der Technik bekannten Lösungen nutzen jeweils Bewegungsinformationen der mobilen Endeinrichtungen, um daraus Informationsdaten, beispielsweise in Form von Verkehrsinformationsdaten zu erzeugen. Diese bekannten Lösungen bieten jedoch nicht in allen Situationen ohne weiteres ein genaues Abbild der tatsächlich vorherrschenden Verkehrssituation. Die Erfassung allein von Bewegungsinformationen kann beispielsweise nicht zwischen einer leeren Straße in der Nacht (in diesem Fall ist beispielsweise keinerlei Verkehr vorhanden) und einem totalen Verkehrsstau (in diesem Fall bewegen sich die mobilen Endgeräte nicht) unterscheiden.

Ausgehend vom bekannten Stand der Technik liegt der vorliegenden Erfindung die Aufgabe zugrunde, ein Verfahren sowie ein System der eingangs genannten Art derart weiterzubilden, dass zu jeder Zeit und in jeder Situation adäquate Informationsdaten erzeugt werden können.

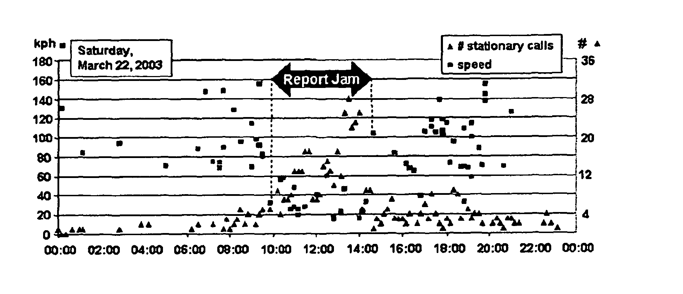

Diese Aufgabe wird erfindungsgemäß gelöst durch das Verfahren mit den Merkmalen gemäß dem unabhängigen Patentanspruch 1 sowie das System mit den Merkmalen gemäß dem unabhängigen Patentanspruch 19. Weitere Vorteile, Merkmale, Details, Aspekte und Effekte der Erfindung ergeben sich aus den Unteransprüchen, der Beschreibung sowie der Zeichnung. Merkmale und Details, die im Zusammenhang mit dem erfindungsgemäßen Verfahren beschrieben sind, gelten dabei selbstverständlich auch im Zusammenhang mit dem erfindungsgemäßen System, und jeweils umgekehrt.

Gemäß dem ersten Aspekt der Erfindung wird ein Verfahren zum Erzeugen von Informationsdaten auf der Basis von in einem zellularen Kommunikationsnetz erzeugten spezifischen Daten mobiler Endeinrichtungen bereitgestellt, wobei spezifische Daten wenigstens einer mobilen Endeinrichtung erfasst und in einer zentralen Rechnereinheit elektronisch bearbeitet werden und wobei Informationsdaten bezüglich wenigstens einer Zelle des Kommunikationsnetzes erzeugt werden. Dieses Verfahren ist erfindungsgemäß dadurch gekennzeichnet, dass innerhalb der zentralen Rechnereinheit auf der Basis erfasster spezifischer Daten mobiler Endeinrichtungen die Anzahl und/oder die Geschwindigkeit der sich pro Zeiteinheit durch die wenigstens eine Zelle bewegenden Endeinrichtungen ermittelt wird, dass innerhalb der zentralen Rechnereinheit auf der Basis erfasster spezifischer Daten mobiler Endeinrichtungen die Anzahl der sich pro Zeiteinheit stationär in der wenigstens einen Zelle befindlichen Endeinrichtung ermittelt wird, dass die pro Zeiteinheit ermittelten Werte sich bewegender stationärer Endeinrichtungen in der wenigstens einen Zelle in der zentralen Rechnereinheit elektronisch miteinander verglichen werden und dass aus dem ermittelten Vergleichswert in der zentralen Rechnereinheit Informationsdaten generiert werden.

Durch das erfindungsgemäße Verfahren wird es auf besonders einfache Weise möglich, zu jeder Zeit und in jeder Situation adäquate Informationsdaten zu erzeugen. Der erfinderische Grundgedanke liegt darin, dass neben der Erfassung von spezifischen Daten sich bewegender mobiler Endeinrichtungen pro Zeiteinheit für die gleiche Zeiteinheit auch spezifische Daten von stationären mobilen Endeinrichtungen erfasst werden. Aus diesen Daten wird pro Zeiteinheit jeweils die Anzahl und/oder die Geschwindigkeit der sich durch wenigstens eine Zelle bewegenden mobilen Endeinrichtungen beziehungsweise der sich in wenigstens einer Zelle stationär befindlichen mobilen Endeinrichtungen ermittelt. Aus dem sich daraus ergebenden Vergleichswert (beim Vergleich der Anzahlen etwa aus dem sich ergebenden Zahlenverhältnis) werden anschließend in der zentralen Rechnereinheit Informationsdaten generiert.

Zunächst wird das Verfahren in einem zellularen Kommunikationsnetz durchgeführt. Dabei ist die Erfindung jedoch nicht auf bestimmte Typen zellularer Kommunikationsnetze beschränkt. Besonders vorteilhaft kann das Verfahren jedoch unter Verwendung eines zellularen Mobilfunknetzes durchgeführt werden, wobei in einem solchen Fall die mobilen Endgeräte als Mobiltelefone ausgebildet sind und wobei die Informationsdaten aus spezifischen Daten der Mobiltelefone ermittelt werden. Auf der Basis von im zellularen Kommunikationsnetz erzeugten spezifischen Daten mobiler Endeinrichtungen werden anschließend entsprechende Informationsdaten erzeugt. Dabei ist die Erfindung nicht auf bestimmte Arten von mobilen Endeinrichtungen beschränkt. So kann es sich bei den mobilen Endeinrichtungen beispielsweise um mobile Computer, PDA's (Personal Digital Assistent), um Mobiltelefone oder dergleichen handeln.

Ebenso ist die Erfindung nicht auf bestimmte Arten von spezifischen Daten der mobilen Endeinrichtung beschränkt, mittels derer Informationsdaten erzeugt werden können. Vorteilhaft handelt es sich bei solchen spezifischen Daten um Informationsdaten, die während des Betriebs der mobilen Endeinrichtungen ohnehin anfallen. Hierbei kann es sich bei den spezifischen Daten der bewegten und stationären Endeinrichtungen um identische Datentypen, allerdings auch um jeweils unterschiedliche Datentypen handeln. Dadurch ist das Verfahren überall dort einsetzbar, wo sich entsprechende mobile Endeinrichtungen befinden. Einige nicht ausschließliche Beispiele hierzu werden nachfolgend näher beschrieben. So kann es sich bei den spezifischen Daten beispielsweise um Daten in Bezug auf die Bewegung auf die mobilen Endgeräte, etwa zwischen verschiedenen Zellen (Handover zwischen Zellen) und/oder innerhalb einer Zelle, die zeitabhängige und/oder örtliche Verteilung der mobilen Endgeräte die Anzahl und/oder Dichte der mobilen Endgeräte pro Zelle, die Gesprächsaufbaurate und/oder -abbaurate und dergleichen handeln. Natürlich ist es auch denkbar, als zu erfassende spezifische Daten die Anrufhäufigkeit bei bestimmten Rufnummern zu erfassen. Weiterhin ist es denkbar, dass Positionsdaten der mobilen Endeinrichtungen erzeugt werden, die anschließend zu einem Positionsprofil zusammengesetzt werden können.

Wenn das Verfahren im Zusammenhang mit einem zellularen Mobilfunknetz betrieben wird ist es grundsätzlich möglich, als spezifische Daten der in diesem Fall als Mobiltelefon ausgebildeten Endeinrichtungen sämtliche Informationsdaten zu verwerten, die im Rahmen der grundlegenden Funktionsweise des Mobilfunknetzes anfallen. Darunter fallen neben den vorstehend genannten Informationsdaten auch Echtzeit- und Zellaktivitätsdaten von aktiven mobilen Endeinrichtungen. Diese werden in der Regel von entsprechenden Basisstationen empfangen, die wiederum einzelnen Zellen des Mobilfunknetzes zugeordnet sind. Über die jeweiligen Basisstationen werden die empfangenen Daten an eine zentrale Rechnereinheit weitergeleitet, wo sie weiterverarbeitet werden. Insbesondere werden von den Basisstationen Daten von solchen Mobiltelefonen empfangen, die sich gerade in jeweils einer Zelle befinden. Dazu ist es nicht unbedingt erforderlich, dass mittels der Mobiltelefone zur Erfassung von spezifischen Daten gerade auch ein Telefonat geführt werden müsste. Vielmehr reicht es auch, wenn sich das Mobiltelefon in einem Stand-By-Modus befindet, dass heißt, wenn es lediglich eingeschaltet ist. In einem solchen Fall sendet das Mobiltelefon in regelmäßigen Abständen sogenannte Registrierungssignale aus, die dann von in der Nähe befindlichen Basisstationen erfasst und an die zentrale Rechnereinheit weitergeleitet werden. Hierbei handelt es sich um eine grundlegende Funktionsweise eines zellularen Mobilfunknetzes.

Ebenfalls ist die Erfindung nicht auf bestimmte Typen von Informationsdaten, die mit dem erfindungsgemäßen Verfahren erzeugt werden können, beschränkt. So ist es beispielsweise denkbar, dass mit dem Verfahren die Fortbewegungszeit von mobilen Endeinrichtungen durch eine oder mehrere Zelle(n) des Kommunikationsnetzes ermittelt werden kann. Ebenso ist es möglich, dass mit dem erfindungsgemäßen Verfahren Verkehrsinformationen erzeugt werden. Dabei ist die Erfindung jedoch nicht auf bestimmte Arten von Verkehrsinformationen beschränkt. So ist es beispielsweise möglich, Verkehrsinformationen zu erzeugen, die die aktuelle Verkehrslage auf Straßen widerspiegeln. Auch kann das Verfahren als Navigationshilfe eingesetzt werden oder aber als statistische Grundlage für die Verkehrsplanung - etwa von öffentlichen Stellen - herangezogen werden. Außerhalb der Erzeugung von Verkehrsinformationsdaten ist es mit dem erfindungsgemäßen Verfahren auch möglich, Informationsdaten im Zusammenhang mit sogenannten Location Based Services (LBS) oder dergleichen zu erzeugen.

Erfindungsgemäß ist vorgesehen, dass die spezifischen Daten der mobilen Endeinrichtungen erfasst und in einer zentralen Rechnereinheit elektronisch bearbeitet werden. In der zentralen Rechnereinheit werden dann die entsprechenden Informationsdaten erzeugt beziehungsweise generiert. Im einfachsten Fall kann das Verfahren zur Erzeugung von Informationsdaten nur innerhalb einer einzigen Zelle des Kommunikationsnetzes herangezogen werden. Selbstverständlich ist es auch möglich, dass das Verfahren zur Erzeugung von Informationsdaten über mehrere Zellen des Kommunikationsnetzes hinweg eingesetzt werden kann, sodass dieses im Kommunikationsnetz flexibel einsetzbar ist.

Erfindungsgemäß ist nunmehr vorgesehen, dass mehrere Sorten von spezifischen Daten ermittelt werden. Dabei ist vorgesehen, dass die ermittelten Daten jeweils pro einer bestimmten Zeiteinheit ermittelt werden. Jedoch ist die Erfindung nicht auf bestimmte Längen der zu betrachtenden Zeiteinheiten beschränkt. Diese ergeben sich vielmehr nach dem jeweiligen Einsatzgebiet des Verfahrens beziehungsweise der Art der zu erzeugenden Informationsdaten.

Zunächst wird innerhalb der zentralen Rechnereinheit auf der Basis erfasster spezifischer Daten mobiler Endeinrichtungen die Anzahl und/oder die Geschwindigkeit der sich pro Zeiteinheit durch die wenigstens eine Zelle des Kommunikationsnetzes bewegenden Endeinrichtungen ermittelt. Zusätzlich dazu wird für die gleiche Zeiteinheit innerhalb der zentralen Rechnereinheit auf der Basis erfasster spezifischer Daten der mobilen Endeinrichtungen auch die Anzahl der sich stationär in der wenigstens einen Zelle befindlichen Endeinrichtungen ermittelt. Die pro Zeiteinheit ermittelten Werte (beispielsweise Anzahlen und/oder Geschwindigkeitswerte) der sich in der wenigstens einen Zelle bewegenden und stationären Endeinrichtungen werden in der zentralen Rechnereinheit elektronisch miteinander verglichen. Aus dem sich daraus ergebenden Vergleichswert können dann die entsprechenden Informationsdaten erzeugt werden.

Die erfindungsgemäße Ausgestaltung des Verfahrens weist eine Reihe von Vorteilen auf, die nachfolgend anhand eines Beispiels, bei dem Informationsdaten in Form von Verkehrsinformationsdaten erzeugt werden, näher erläutert wird. Das erfindungsgemäße Verfahren führt zunächst zu einer Verbesserung bei der Erkennung verschiedener Verkehrszustände. Insbesondere wird es möglich, Verkehrszustände auch in Nachtstunden bei fehlender Netzaktivität zu erkennen.

Dabei liegt dem Verfahren die Erkenntnis zugrunde, dass die Anzahl stationärer Telefongespräche (beziehungsweise die Anzahl stationärer, aktiver und/oder im Stand-By-Modus befindlicher mobiler Endeinrichtungen) bei einem Verkehrsstau zusätzlich zur sinkenden durchschnittlichen Geschwindigkeit der beobachtbaren, sich bewegenden Telefongespräche (die sich bewegenden aktiven und/oder im Stand-By-Modus befindlichen Endeinrichtungen) ansteigt. Beide Informationen zusammen ergeben eine bessere Zuordnung der erfassten spezifischen Daten zum Straßenverkehrsgeschehen. Die Erfassung allein von sich bewegenden mobilen Endeinrichtungen (von sich bewegenden Telefongesprächen) kann beispielsweise nicht zwischen einer leeren Straße in der Nacht (in diesem Fall gibt es weder stationäre noch bewegte Gespräche) und einem totalen Verkehrsstau (in diesem Fall gibt es viele stationäre Gespräche aber keine bewegten Gespräche) unterscheiden. Bei dem erfindungsgemäßen Verfahren wird zusätzlich zur Erfassung der bewegten Gespräche auch die Erfassung und Zählung stationärer Gespräche im gleichen Zeitraum herangezogen.

Mit Hilfe des erfindungsgemäßen Verfahrens ist insbesondere eine qualitative Verbesserung des sehr einfachen und anonymen Verfahrens für die Zellen-Wechsel-Verfolgung eines Mobiltelefons gegeben. Da dieses Verfahren keine hohen Speicherressourcen benötigt und auch die entsprechenden Rechner kaum belastet werden, kann es als Erweiterung in die jeweilige Software der BSC's (Base-Station-Controller) integriert werden. Zusätzliche Hardwarekomponenten werden in diesem Fall nicht benötigt.

Vorteilhaft werden die spezifischen Daten der mobilen Endeinrichtungen elektronisch ermittelt. Die Erzeugung der Informationsdaten auf der Basis der spezifischen Daten mobiler Endeinrichtungen kann vorteilhaft automatisch in der zentralen Rechnereinheit erfolgen. Dabei kann die Durchführung des Verfahrens vorteilhaft unter Zuhilfenahme geeigneter Programmmittel beziehungsweise Software vorgenommen, zumindest aber unterstützt werden.

Vorzugsweise können die erfassten spezifischen Daten der sich bewegenden Endeinrichtung(en) und/oder der stationären Endeinrichtung(en) elektronisch mit einer Zeitmarke und/oder mit spezifischen Zelldaten zu Vergleichsdaten verknüpft und in der zentralen Rechnereinheit bearbeitet werden. Auf diese Weise wird es in besonders einfacher Weise möglich, sich über größere Distanzen erstreckende Informationsdaten, beispielsweise Verkehrsinformationsdaten, zu erzeugen.

Bei den spezifischen Zelldaten, die bei der Erzeugung der Vergleichsdaten eine Rolle spielen, kann es sich beispielsweise um Zell-Identifikations-Daten, um Daten die Zellgröße betreffend oder dergleichen handeln.

Auf diese Weise kann mit dem erfindungsgemäßen Verfahren nicht nur die Anzahl der sich bewegenden Endeinrichtungen ermittelt werden. Zusätzlich kann über die spezifischen Zelldaten, beispielsweise die Größe der Zelle, ein Maß für die Geschwindigkeit der sich bewegenden Endeinrichtungen angegeben werden. Diese Werte werden dann mit den Werten für die stationären Endeinrichtungen verglichen oder verknüpft.

Zusätzlich ist es möglich, die ermittelten Werte der sich pro Zeiteinheit durch die wenigstens eine Zelle bewegenden mobilen Endeinrichtungen statistisch zu filtern, beispielsweise nach einem bestimmten Datum, nach bestimmten Uhrzeiten oder dergleichen.

Vorteilhaft kann vorgesehen sein, dass die Geschwindigkeit der sich durch die wenigstens einen Zelle bewegenden mobilen Endeinrichtungen aus den spezifischen Daten der Endeinrichtungen und den spezifischen Zelldaten - vorzugsweise in der zentralen Rechnereinheit - berechnet wird.

Um einen Vergleich der sich bewegenden Endeinrichtungen mit den stationären Endeinrichtungen zu vereinfachen, kann beispielsweise vorgesehen sein, dass aus den ermittelten Geschwindigkeitswerten der sich pro Zeiteinheit durch die wenigstens eine Zelle bewegenden Endeinrichtungen in der zentralen Rechnereinheit eine mittlere Geschwindigkeit der sich bewegenden Endeinrichtungen errechnet wird.

Die Erzeugung der Vergleichsdaten kann auf unterschiedliche Weise erfolgen. So ist es beispielsweise denkbar, dass die spezifischen Daten einer mobilen Endeinrichtung in der mobilen Endeinrichtung selbst mit einer Zeitmarke und/oder mit spezifischen Zelldaten zu Vergleichsdaten verknüpft werden. Diese Vergleichsdaten werden dann anschließend zur zentralen Rechnereinheit übertragen und dort bearbeitet. In anderer Ausgestaltung kann auch vorgesehen sein, dass die spezifischen Daten einer mobilen Endeinrichtung zur zentralen Rechnereinheit übertragen und dort mit einer Zeitmarke und/oder mit spezifischen Zelldaten zu Vergleichsdaten verknüpft werden. Im letztgenannten Fall kann die mobile Endeinrichtung wesentlich einfacher und damit kostengünstiger ausgestaltet sein.

Wie weiter oben bereits beschrieben wurde, können vorteilhaft Informationsdaten bezüglich zweier oder mehrerer Zellen des Kommunikationsnetzes erzeugt werden, wobei zumindest einzelne dieser Zellen direkt benachbart oder räumlich voneinander getrennt im Kommunikationsnetz ausgebildet sein können. Diesbezüglich kann beispielsweise vorgesehen sein, dass Vergleichsdaten von Endeinrichtungen innerhalb zweier oder mehrerer Zellen erzeugt und in der zentralen Rechnereinheit miteinander verglichen werden. Bei Übereinstimmung zumindest von Bestandteilen spezifischer Daten von Endeinrichtungen in unterschiedlichen Zellen kann dann in der zentralen Rechnereinheit elektronisch die Zeitdifferenz zwischen den jeweiligen Zeitmarken ermittelt und daraus die Fortbewegungszeit der Endeinrichtungen ermittelt werden.

Dies soll anhand eines nicht ausschließlichen Beispiels verdeutlicht werden. Wenn die Fortbewegungszeit wenigstens einer mobilen Endeinrichtung zwischen zwei Zellen, beispielsweise zwischen einem Ausgangspunkt A und einem räumlich davon getrennten Endpunkt E ermittelt werden soll, werden in einem ersten Schritt zunächst spezifische Daten wenigstens einer am Ausgangspunkt A befindlichen mobilen Endeinrichtung ermittelt und jeweils mit einer entsprechenden Zeitmarke ZA verknüpft. Dabei ist die Erfindung nicht auf bestimmte spezifische Daten der mobilen Endeinrichtungen beschränkt. Wichtig ist lediglich, dass die mobile Endeinrichtung aufgrund der ermittelten spezifischen Daten einwandfrei erkannt und charakterisiert werden kann. Diese Informationen werden mit der entsprechenden Zeitmarke und mit spezifischen Zelldaten verknüpft. Auf diese Weise lässt sich bestimmen, dass sich die mobile Endeinrichtung zu einem bestimmten Zeitpunkt, der der Zeitmarke ZA entspricht, am Ausgangspunkt A, der in einer bestimmten Zelle liegt, befunden hat.

Auf gleiche Weise werden spezifische Daten wenigstens einer am festgelegten Endpunkt E befindlichen mobilen Endeinrichtung ermittelt und jeweils mit einer Zeitmarke ZE verknüpft. Auf diese Weise kann festgelegt werden, dass sich eine mobile Endeinrichtung zu einem bestimmten Zeitpunkt, der der Zeitmarke ZE entspricht, am Endpunkt E befunden hat.

Die auf diese Weise ermittelten spezifischen Informationen der wenigstens einen am Ausgangspunkt A und am Endpunkt E befindlichen mobilen Endeinrichtung werden in der wenigstens einen zentralen Rechnereinheit elektronisch miteinander verglichen. Auf diese Weise wird überprüft, ob die jeweiligen spezifischen Daten, und damit letztendlich auch die dazugehörigen mobilen Endeinrichtungen übereinstimmen. Wenn die spezifischen Daten einer mobilen Endeinrichtung am Ausgangspunkt A und am Endpunkt E übereinstimmen, bedeutet dies, dass sich ein und dieselbe mobile Endeinrichtung sowohl am Ausgangspunkt A als auch am Endpunkt E befunden hat. Wird eine solche Übereinstimmung festgestellt, wird in der zentralen Rechnereinheit elektronisch die Zeitdifferenz ZE-ZA zwischen den Zeitmarken gebildet. Aus der entstehenden Zeitdifferenz wird anschließend die Fortbewegungszeit der mobilen Endeinrichtung zwischen dem Ausgangspunkt A und dem räumlich davon getrennten Endpunkt E ermittelt.

Weiterhin wird auch die Anzahl der sich in den betrachteten Zellen und möglicherweise auch in solchen Zellen, die zwischen den betrachteten Zellen liegen, befindlichen stationären mobilen Endeinrichtungen erfasst. Wenn nun die Fortbewegungszeit einer mobilen Endeinrichtung von dem Ausgangspunkt A zum Endpunkt E abnimmt, und gleichzeitig die Anzahl der aktiven, stationären mobilen Endeinrichtungen innerhalb der betrachteten Zellen - und/oder in dazwischen liegenden Zellen - zunimmt, lässt dies den Rückschluss zu, dass ein Stau vorliegt.

Besonders vorteilhaft kann vorgesehen sein, dass zumindest Bestandteile der spezifischen Daten oder der Vergleichsdaten der bewegten und/oder stationären Endeinrichtungen erfasst und über einen vorbestimmten Zeitraum addiert werden, wobei der Zeitraum zwei oder mehr hintereinander liegende Zeiteinheiten umfasst. Auf diese Weise lassen sich in besonders einfacher Weise statistische Auswertungen, Langzeitauswertungen und dergleichen vornehmen.

Vorteilhaft kann vorgesehen sein, dass zumindest Bestandteile der spezifischen Daten oder der Vergleichsdaten und/oder der Informationsdaten zumindest zeitweilig in wenigstens einer Speichereinrichtung abgespeichert werden. Auf diese Weise können die Daten auch zu einem späteren Zeitpunkt ohne weiteres noch verwertet werden.

Auch kann es vorteilhaft sein, dass zumindest Bestandteile von spezifischen Daten oder von Vergleichsdaten und/oder von Informationsdaten innerhalb der zentralen Rechnereinheit mit dazu korrespondierenden Referenzdaten verglichen werden. Bei diesen Referenzdaten kann es sich beispielsweise um Daten aus der Vergangenheit handeln, wobei vorteilhaft aktuell ermittelte Daten und Referenzdaten über einen vorgegebenen Zeitraum zu einer Historiendatei verknüpft werden. Die Erzeugung solcher Historiendateien ist insbesondere dann von Vorteil, wenn mit dem Verfahren etwa eine statistische Grundlage für die Verkehrsplanung geschaffen werden soll.

Wie weiter oben bereits dargelegt wurde, ist die Erfindung nicht auf bestimmte Typen spezifischer Daten der Endeinrichtungen beschränkt. Neben den weiter oben beschriebenen Beispielen kann es sich bei den spezifischen Daten um Kommunikationsnetzdaten, insbesondere Datenpakete oder Teile von Datenpaketen, handeln. Wenn es sich bei dem Kommunikationsnetz um ein Mobilfunknetz, beispielsweise das GSM-Netz handelt, kann es sich bei den spezifischen Daten beispielsweise um GSM-Signalisierungsdaten handeln. Weitere nicht ausschließliche Beispiele für Kommunikationsnetzdaten sind im Zusammenhang mit dem Ausführungsbeispiel weiter unten beschrieben.

Gemäß dem zweiten Aspekt der Erfindung wird ein System zum Erzeugen von Informationsdaten auf der Basis von in einem zellularen Kommunikationsnetz erzeugten spezifischen Daten mobiler Endeinrichtungen bereitgestellt, wobei spezifische Daten wenigstens einer mobilen Endeinrichtung erfasst und in einer zentralen Rechnereinheit bearbeitet werden und wobei das System zum Erzeugen von Informationsdaten bezüglich wenigstens einer Zelle des Kommunikationsnetzes ausgebildet ist. Das System ist erfindungsgemäß gekennzeichnet durch Mittel zur Durchführung des wie vorstehend beschriebenen, erfindungsgemäßen Verfahrens. Insbesondere kann das Kommunikationsnetz als zellulares Mobilfunknetz ausgebildet sein, wobei die Endeinrichtungen als Mobiltelefone ausgebildet sind.

Die Erfindung wird nun anhand eines Ausführungsbeispiels unter Bezugnahme auf die beiliegende Zeichnung näher erläutert. Dabei stellt das in der einzigen Figur dargestellte Diagramm die über einen bestimmten Zeitraum in wenigstens einer Zelle des Kommunikationsnetzes erfassten sich bewegenden mobilen Endeinrichtungen und stationären mobilen Endeinrichtungen dar.

Das Diagramm zeigt real gemessene Daten im Verlauf des 22. März 2003 dar. Auf der waagerechten Achse des Diagramms ist der insgesamt betrachtete Zeitraum von 24 Stunden aufgetragen. Die linke, senkrechte Achse des Diagramms gibt die durchschnittliche Geschwindigkeit der sich bewegenden mobilen Endeinrichtungen wieder, während die rechte, senkrechte Achse des Diagramms die absolute Anzahl der stationären mobilen Endeinrichtungen wiedergibt.

Bei den quadratischen Punkten handelt es sich um die ermittelten durchschnittlichen Geschwindigkeiten von sich bewegenden mobilen Endeinrichtungen während einer Zeiteinheit (im vorliegenden Beispiel beträgt die Zeiteinheit 10 Minuten) in einer ausgewählten Funkzelle. Die dreieckigen Punkte stellen die in einem 10-Minutenintervall aufsummierten, angefallenen stationären Gespräche, und damit die Anzahl der sich in der ausgewählten Funkzelle befindlichen, aktiven, stationären mobilen Endeinrichtungen, dar. Das Diagramm zeigt einen deutlichen Unterschied zwischen den Nachtstunden und beispielsweise der Zeit von 9.30 Uhr bis 14.00 Uhr.

Die von den mobilen Endeinrichtungen erfassten spezifischen Daten werden zusammen mit der aktuellen Uhrzeit, bei der es sich dann um die weiter oben beschriebenen Zeitmarken handelt, und spezifischen Zelldaten in Form von Zell-Identifikations-Daten, an die zentrale Rechnereinheit gesendet. Die zentrale Rechnereinheit speichert diese Daten in Form einer Historiendatei ab und addiert sie fortlaufend zu einer über einen Zeitraum, bei dem es sich um einen wählbaren Zeitraum handeln kann, konsolidierten "Anzahl stationärer Gespräche". Die gemeinsame Auswertung der mittleren Geschwindigkeiten der sich bewegenden mobilen Endeinrichtungen und der Anzahl der stationären mobilen Endeinrichtungen wird anschließend zur Erzeugung von Informationsdaten, beispielsweise zur Auswertung der Verkehrszustände, herangezogen.

Dabei kann von folgender Grundüberlegung ausgegangen werden. Keine bewegten Gespräche beziehungsweise keine sich bewegenden mobilen Endeinrichtungen (die Geschwindigkeit ist null) und keine stationären Gespräche (keine sich in der Zelle befindlichen stationären mobilen Endeinrichtungen) bedeutet, dass eine freie Straße ohne Verkehr vorliegt. Keine bewegten Gespräche beziehungsweise keine sich bewegenden mobilen Endeinrichtungen (die Geschwindigkeit ist null) und gleichzeitig viele stationäre Gespräche beziehungsweise sich in der Zelle befindliche stationäre mobile Endeinrichtungen bedeutet, dass eine blockierte Straße ohne bewegten Verkehr vorliegt.

Bei den spezifischen Daten der Endeinrichtungen, auf deren Basis die Informationsdaten erzeugt werden, kann es sich beispielsweise um Datenpakete oder Teile von Datenpaketen handeln. So ist es beispielsweise denkbar, dass aus dem Mitschnitt der Daten auf dem Interface des Kommunikationsnetzes zwischen BTS (Base Transceiver Station) und BSC (Base Station Controller), beispielsweise hier dem Abis Interface des GSM-Netzes, kontinuierlich die Meldungen der OSI-Schicht 3 ausgelesen und bestimmte Nachrichten ausgewertet werden. Dies können beispielsweise sein die "Channel Activation - CHNAV", das "Handover Kommando - HOCMD" oder die "Timing Advance Parameter TA in den Network Measurement Reports - NMR". Das "type of activation" aus CHNAV darf kein Handoverereignis sein, was die Schlussfolgerung zulässt, dass das Gespräch in der betreffenden Zelle begonnen hat. Wenn weiterhin dass "timing advance" aus den NMR konstant bleibt, bedeutet dies, dass sich das Mobiltelefon nicht in der Zelle bewegt. Wenn das HOCMD Paket nicht vorkommt, bedeutet dies, dass ein Gespräch nicht auf eine andere Zelle übergeben wird. Schließlich signalisiert das RCHRA Paket das Ende einer Sequenz, was bedeutet, dass ein Gespräch beendet worden ist.

## Patentansprüche

1. Verfahren zum Erzeugen von Informationsdaten auf der Basis von in einem zellularen Kommunikationsnetz erzeugten spezifischen Daten mobiler Endeinrichtungen, wobei spezifische Daten wenigstens einer mobilen Endeinrichtung erfasst und in einer zentralen Rechnereinheit elektronisch bearbeitet werden und wobei Informationsdaten bezüglich wenigstens einer Zelle des Kommunikationsnetzes erzeugt werden,
**dadurch gekennzeichnet,**
**dass** innerhalb der zentralen Rechnereinheit auf der Basis erfasster spezifischer Daten mobiler Endeinrichtungen die Anzahl und/oder die Geschwindigkeit der sich pro Zeiteinheit durch die wenigstens eine Zelle bewegenden Endeinrichtungen ermittelt wird,
**dass** innerhalb der zentralen Rechnereinheit auf der Basis erfasster spezifischer Daten mobiler Endeinrichtungen die Anzahl der sich pro Zeiteinheit stationär in der wenigstens eine Zelle befindlichen Endeinrichtungen ermittelt wird,
**dass** die pro Zeiteinheit ermittelten Werte sich bewegender und stationärer Endeinrichtungen in der wenigstens einen Zelle in der zentralen Rechnereinheit elektronisch miteinander verglichen werden und
**dass** aus dem ermittelten Vergleichswert in der zentralen Rechnereinheit Informationsdaten generiert werden.

2. Verfahren nach Anspruch 1, **dadurch gekennzeichnet, dass** dieses unter Verwendung eines zellularen Mobilfunknetzes durchgeführt wird, wobei die mobilen Endeinrichtungen als Mobiltelefone ausgebildet sind.

3. Verfahren nach Anspruch 1 oder 2, **dadurch gekennzeichnet, dass** damit die Fortbewegungszeit von Endeinrichtungen durch eine oder mehrere Zelle(n) des Kommunikationsnetzes ermittelt wird.

4. Verfahren nach einem der Ansprüche 1 bis 3, **dadurch gekennzeichnet, dass** damit Verkehrsinformationen erzeugt werden.

5. Verfahren nach einem der Ansprüche 1 bis 4, **dadurch gekennzeichnet, dass** die erfassten spezifischen Daten der sich bewegenden Endeinrichtung(en) und/oder der stationären Endeinrichtung(en) elektronisch mit einer Zeitmarke zu Vergleichsdaten verknüpft und in der zentralen Rechnereinheit bearbeitet werden.

6. Verfahren nach einem der Ansprüche 1 bis 5, **dadurch gekennzeichnet, dass** die erfassten spezifischen Daten der sich bewegenden Endeinrichtung(en) und/oder der stationären Endeinrichtung(en) elektronisch mit spezifischen Zelldaten zu Vergleichsdaten verknüpft und in der zentralen Rechnereinheit bearbeitet werden.

7. Verfahren nach Anspruch 6, **dadurch gekennzeichnet, dass** es sich bei den spezifischen Zelldaten um Zell-Identifikations-Daten und/oder Daten die Zellgröße betreffend handelt.

8. Verfahren nach Anspruch 6 oder 7, **dadurch gekennzeichnet, dass** die Geschwindigkeit der sich durch die wenigstens eine Zelle bewegenden mobilen Endeinrichtungen aus den spezifischen Daten der Endeinrichtungen und den spezifischen Zelldaten berechnet wird.

9. Verfahren nach einem der Ansprüche 1 bis 8, **dadurch gekennzeichnet, dass** aus den ermittelten Geschwindigkeitswerten der sich pro Zeiteinheit durch die wenigstens eine Zelle bewegenden Endeinrichtungen in der zentralen Rechnereinheit eine mittlere Geschwindigkeit der sich bewegenden Endeinrichtungen errechnet wird.

10. Verfahren nach einem der Ansprüche 5 bis 9, **dadurch gekennzeichnet, dass** die spezifischen Daten einer mobilen Endeinrichtung in der mobilen Endeinrichtung mit einer Zeitmarke und/oder mit spezifischen Zelldaten zu Vergleichsdaten verknüpft werden und dass die Vergleichsdaten anschließend zur zentralen Rechnereinheit übertragen werden.

11. Verfahren nach einem der Ansprüche 5 bis 9, **dadurch gekennzeichnet, dass** die spezifischen Daten einer mobilen Endeinrichtung zur zentralen Rechnereinheit übertragen und dort mit einer Zeitmarke und/oder mit spezifischen Zelldaten zu Vergleichsdaten verknüpft werden.

12. Verfahren nach einem der Ansprüche 1 bis 11, **dadurch gekennzeichnet, dass** Informationsdaten bezüglich zweier oder mehrerer Zellen des Kommunikationsnetzes erzeugt werden, wobei zumindest einzelne dieser Zellen direkt benachbart oder räumlich voneinander getrennt im Kommunikationsnetz ausgebildet sein können.

13. Verfahren nach Anspruch 12, soweit auf einen der Ansprüche 5 bis 11 rückbezogen, **dadurch gekennzeichnet, dass** Vergleichsdaten von Endeinrichtungen innerhalb zweier oder mehrerer Zellen erzeugt und in der zentralen Rechnereinheit miteinander verglichen werden, dass bei Übereinstimmung zumindest von Bestandteilen spezifischer Daten von Endeinrichtungen in unterschiedlichen Zellen in der zentralen Rechnereinheit elektronisch die Zeitdifferenz zwischen den jeweiligen Zeitmarken ermittelt und daraus die Fortbewegungszeit der Endeinrichtungen ermittelt wird.

14. Verfahren nach einem der Ansprüche 1 bis 13, **dadurch gekennzeichnet, dass** zumindest Bestandteile der spezifischen Daten oder der Vergleichsdaten der bewegten und/oder stationären Endeinrichtungen erfasst und über einen vorbestimmten Zeitraum addiert werden, wobei der Zeitraum zwei oder mehr hintereinanderliegende Zeiteinheiten umfasst.

15. Verfahren nach einem der Ansprüche 1 bis 14, **dadurch gekennzeichnet, dass** zumindest Bestandteile der spezifischen Daten oder der Vergleichsdaten und/oder der Informationsdaten zumindest zeitweilig in wenigstens einer Speichereinrichtung abgespeichert werden.

16. Verfahren nach einem der Ansprüche 1 bis 15, **dadurch gekennzeichnet, dass** zumindest Bestandteile von spezifischen Daten oder von Vergleichsdaten und/oder von Informationsdaten innerhalb der zentralen Rechnereinheit mit dazu korrespondierenden Referenzdaten verglichen werden.

17. Verfahren nach Anspruch 16, **dadurch gekennzeichnet, dass** es sich bei den Referenzdaten um Daten aus der Vergangenheit handelt und dass aktuell ermittelte Daten und Referenzdaten über einen vorgegebenen Zeitraum zu einer Historiendatei verknüpft werden.

18. Verfahren nach einem der Ansprüche 1 bis 17, **dadurch gekennzeichnet, dass** es sich bei den spezifischen Daten der Endeinrichtungen um Kommunikationsnetzdaten, insbesondere Datenpakete oder Teile von Datenpaketen, handelt.

19. System zum Erzeugen von Informationsdaten auf der Basis von in einem zellularen Kommunikationsnetz erzeugten spezifischen Daten mobiler Endeinrichtungen, wobei spezifische Daten wenigstens einer mobilen Endeinrichtung erfasst und in einer zentralen Rechnereinheit bearbeitet werden, und wobei das System zum Erzeugen von Informationsdaten bezüglich wenigstens einer Zelle des Kommunikationsnetzes ausgebildet ist, **gekennzeichnet durch** Mittel zur Durchführung des Verfahrens nach einem der Ansprüche 1 bis 18.

20. System nach Anspruch 19, **dadurch gekennzeichnet, dass** das Kommunikationsnetz als zellulares Mobilfunknetz ausgebildet ist und dass die Endeinrichtungen als Mobiltelefone ausgebildet sind.

## Claims

1. Method of producing information data on the basis of specific data from mobile terminals produced in a cellular communications network, wherein specific data from at least one mobile terminal are obtained and electronically processed in a central computer unit and wherein information data are produced in respect of at least one cell of the communications network,
**characterised in that**
inside the central computer unit, on the basis of specific data obtained from mobile terminals, the number and/or the speed of the terminals moving through the at least one cell per unit of time is determined,
inside the central computer unit, on the basis of specific data obtained from mobile terminals, the number of terminals that are stationary in the at least one cell per unit of time is determined,
the values obtained per unit of time for moving and stationary terminals in the at least one cell are compared electronically with one another in the central computer unit and
information data are generated in the central computer unit from the comparison value obtained.

2. Method according to claim 1, **characterised in that** it is carried out using a cellular mobile telephony network, the mobile terminals being embodied as mobile telephones.

3. Method according to claim 1 or 2, **characterised in that** in this way the travel time of terminals through one or more cell(s) of the communications network is determined.

4. Method according to one of claims 1 to 3, **characterised in that** traffic information is produced thereby.

5. Method according to one of claims 1 to 4, **characterised in that** the specific data obtained from the moving terminal(s) and/or the stationary terminal(s) are linked electronically to a time marker to obtain comparison data and processed in the central computer unit.

6. Method according to one of claims 1 to 5, **characterised in that** the specific data obtained from the moving terminal(s) and/or the stationary terminal(s) are linked electronically to specific cell data to obtain comparison data and processed in the central computer unit.

7. Method according to claim 6, **characterised in that** the specific cell data are cell identification data and/or data relating to the cell size.

8. Method according to claim 6 or 7, **characterised in that** the speed of the mobile terminals moving through the at least one cell is calculated from the specific data of the terminals and the specific cell data.

9. Method according to one of claims 1 to 8, **characterised in that** an average speed for the moving terminals is calculated in the central computer from the speeds obtained for the terminals moving through the at least one cell per unit of time.

10. Method according to one of claims 5 to 9, **characterised in that** the specific data of a mobile terminal device are linked in the mobile terminal device to a time marker and/or to specific cell data to form comparison data and the comparison data are then transmitted to the central computer unit.

11. Method according to one of claims 5 to 9, **characterised in that** the specific data of a mobile terminal device are sent to the central computer unit and there they are linked to a time marker and/or to specific cell data to form comparison data.

12. Method according to one of claims 1 to 11, **characterised in that** information data with regard to two or more cells of the communications network are produced, while at least some individual cells may be formed directly adjacent to one another or spatially separated from one another in the communications network.

13. Method according to claim 12, where it is dependent on one of claims 5 to 11, **characterised in that** comparison data from terminals within two or more cells are produced and compared with one another in the central computer unit, **in that**, if there is agreement between at least components of specific data from terminals in different cells, the time difference between the respective time markers is determined electronically in the central computer unit and from this the travel time of the terminals is determined.

14. Method according to one of claims 1 to 13, **characterised in that** at least components of the specific data or the comparison data of the moving and/or stationary terminals are determined and added over a predetermined period of time, this period comprising two or more time units occurring one after the other.

15. Method according to one of claims 1 to 14, **characterised in that** at least components of the specific data or the comparison data and/or the information data are stored at least temporarily in at least one storage device.

16. Method according to one of claims 1 to 15, **characterised in that** at least components of specific data or comparison data and/or information data are compared with corresponding reference data, within the central computer unit.

17. Method according to claim 16, **characterised in that** the reference data are data from the past, and currently obtained data and reference data are linked over a predetermined period of time to form a history file.

18. Method according to one of claims 1 to 17, **characterised in that** the specific data of the terminals are communications network data, particularly data packets or parts of data packets.

19. System for producing information data on the basis of specific data from mobile terminals produced in a cellular communications network, wherein specific data from at least one mobile terminal are captured and processed in a central computer unit, and wherein the system is configured to produce information data in respect of at least one cell of the communications network, **characterised by** means for carrying out the method according to one of claims 1 to 18.

20. System according to claim 19, **characterised in that** the communications network is embodied as a cellular mobile telephony network and **in that** the terminals are embodied as mobile telephones.

## Revendications

1. Procédé servant à obtenir des données d'information sur la base de données spécifiques d'équipements terminaux mobiles, obtenues dans un réseau de communication cellulaire, des données spécifiques au moins d'un équipement terminal mobile étant détectées et traitées par voie électronique dans une unité de calcul centrale et des données d'information concernant au moins une cellule du réseau de communication étant obtenues,
**caractérisé en ce**
**que** le nombre et/ou la vitesse des équipements terminaux en mouvement grâce à la cellule au moins au nombre de une par unité de temps sont déterminés dans l'unité de calcul centrale sur la base des données spécifiques d'équipements terminaux mobiles détectées,
**que** le nombre des équipements terminaux stationnaire dans la cellule au moins au nombre de une par unité de temps est déterminé dans l'unité de calcul centrale sur la base des données spécifiques d'équipements terminaux mobiles détectées,
**que** les valeurs déterminées par unité de temps des équipements terminaux en mouvement et stationnaires sont comparées entre elles par voie électronique dans la cellule au moins au nombre de une, dans l'unité de calcul centrale et
**que** des données d'information sont générées dans l'unité de calcul centrale à partir de la valeur de comparaison déterminée.

2. Procédé selon la revendication 1, **caractérisé en ce que** ledit procédé est mis en oeuvre en utilisant un réseau de radiotéléphonie mobile cellulaire, dans lequel les équipements terminaux mobiles sont réalisés comme des téléphones mobiles.

3. Procédé selon la revendication 1 ou 2, **caractérisé en ce que** le temps de déplacement des équipements terminaux est ainsi déterminé par une ou plusieurs cellules du réseau de communication.

4. Procédé selon l'une quelconque des revendications 1 à 3, **caractérisé en ce qu'**ainsi des informations relatives au trafic sont obtenues.

5. Procédé selon l'une quelconque des revendications 1 à 4, **caractérisé en ce que** les données spécifiques détectées des équipements terminaux en mouvement et/ou des équipements terminaux stationnaires sont liées par voie électronique à un repère de temps pour former des données de comparaison et sont traitées dans l'unité de calcul centrale.

6. Procédé selon l'une quelconque des revendications 1 à 5, **caractérisé en ce que** les données spécifiques détectées des équipements terminaux en mouvement et/ou des équipements terminaux stationnaires sont liées par voie électronique à des données de cellule spécifiques pour former des données de comparaison et sont traitées dans l'unité de calcul centrale.

7. Procédé selon la revendication 6, **caractérisé en ce que** les données cellulaires spécifiques sont des données d'identification de cellule et/ou des données en rapport avec la dimension de la cellule.

8. Procédé selon la revendication 6 ou 7, **caractérisé en ce que** la vitesse des équipements terminaux mobiles en mouvement grâce à la cellule au moins au nombre de une est calculée à partir des données spécifiques des équipements terminaux et à partir des données cellulaires spécifiques.

9. Procédé selon l'une quelconque des revendications 1 à 8, **caractérisé en ce qu'**une vitesse moyenne des équipements terminaux en mouvement est calculée dans l'unité de calcul centrale, à partir des valeurs de vitesse déterminées des équipements terminaux en mouvement grâce à la cellule au moins au nombre de une par unité de temps.

10. Procédé selon l'une quelconque des revendications 5 à 9, **caractérisé en ce que** les données spécifiques d'un équipement terminal mobile sont liées dans l'équipement terminal mobile à un repère de temps et/ou à des données cellulaires spécifiques pour former des données de comparaison, et **en ce que** les données de comparaison sont transmises directement après à l'unité de calcul centrale.

11. Procédé selon l'une quelconque des revendications 5 à 9, **caractérisé en ce que** les données spécifiques d'un équipement terminal mobile sont transmises à l'unité de calcul centrale et y sont liées à un repère de temps et/ou à des données cellulaires spécifiques pour former des données de comparaison.

12. Procédé selon l'une quelconque des revendications 1 à 11, **caractérisé en ce que** des données d'information relatives à deux cellules du réseau de communication ou plus sont obtenues, dans lequel au moins certaines de ces cellules peuvent être réalisées dans le réseau de communication de manière directement adjacente ou de manière séparée les unes des autres d'un point de vue spatial.

13. Procédé selon la revendication 12, de manière étendue selon l'une quelconque des revendications 5 à 11, **caractérisé en ce que** des données de comparaison d'équipements terminaux sont générées dans deux cellules ou plus et sont comparées entre elles dans l'unité de calcul centrale, **en ce que** en cas de concordance au moins de composantes de données spécifiques de terminaux dans diverses cellules, la différence temporelle entre les repères de temps respectifs est déterminée par voie électronique dans l'unité de calcul centrale, et le temps de déplacement des équipements terminaux en est déduit.

14. Procédé selon l'une quelconque des revendications 1 à 13, **caractérisé en ce qu'**au moins des composantes des données spécifiques ou des données de comparaison des équipements terminaux déplacés et/ou stationnaires sont détectées et sont ajoutées sur un laps de temps prédéfini, dans lequel ledit laps de temps comporte deux unités temporelles successives ou plus.

15. Procédé selon l'une quelconque des revendications 1 à 14, **caractérisé en ce qu'**au moins des composantes des données spécifiques ou des données de comparaison et/ou des données d'information sont mémorisées au moins en deux parties dans au moins un système de mémorisation.

16. Procédé selon l'une quelconque des revendications 1 à 15, **caractérisé en ce qu'**au moins des composantes des données spécifiques ou des données de comparaison et/ou des données d'information sont comparées à des données de référence correspondantes dans l'unité de calcul centrale.

17. Procédé selon la revendication 16, **caractérisé en ce que** les données de référence sont des données du passé, et **en ce que** des données déterminées du moment et des données de référence sont liées en un fichier journal par un laps de temps prédéfini.

18. Procédé selon l'une quelconque des revendications 1 à 17, **caractérisé en ce que** les données spécifiques des équipements terminaux sont des données de réseau de communication, en particulier des paquets de données ou des parties de paquets de données.

19. Système servant à obtenir des données d'information sur la base de données spécifiques d'équipements terminaux mobiles, obtenues dans un réseau de communication cellulaire, dans lequel des données spécifiques d'au moins un équipement terminal mobile sont détectées et sont traitées dans une unité de calcul centrale, et dans lequel le système servant à obtenir des données d'informations en rapport avec au moins une cellule du réseau de communication est réalisé, **caractérisé par** des moyens de mise en oeuvre du procédé selon l'une quelconque des revendications 1 à 18.

20. Système selon la revendication 19, **caractérisé en ce que** le réseau de communication est réalisé comme un réseau de radiotéléphonie mobile cellulaire, et **en ce que** les équipements terminaux sont réalisés comme des téléphones mobiles.
